# EUROPEAN PATENT SPECIFICATION

(11) **EP 0 215 026 B1**
(45) Date of publication and mention of the grant of the patent: **19.05.1993**
(21) Application number: 86901264.1
(22) Date of filing: 07.02.1986
(51) Int. Cl.: G02F 1/055

(54) **ELIMINATION OF FIELD-INDUCED INSTABILITIES IN ELECTROOPTIC MODULATORS**
ELIMINATION VON FELDINDUZIERTEN INSTABILITÄTEN IN ELEKTROOPTISCHEN MODULATOREN
ELIMINATION DES INSTABILITES INDUITES PAR UN CHAMP DANS DES MODULATEURS ELECTRO-OPTIQUES

(30) Priority: 19.02.1985 US 702542
(43) Date of publication of application: 25.03.1987
(73) Proprietor: EASTMAN KODAK COMPANY (a New Jersey corporation), Rochester, New York 14650 (US)
(72) Inventor: AGOSTINELLI, John, Anthony, Rochester, NY 14650 (US)
(74) Representative: Parent, Yves
(86) International application number: US8600247
(87) International publication number: WO8605002

(56) References cited:
- GB-A- 2 005 893
- International Broadcast Engineer, vol. 7, no. 137-138, June-July 1976, (Eton Berks, GB), B.M. Solthoff: "Television applications of PLZT ceramics", pp 18-21
- Patent Abstracts of Japan, vol. 3, no. 70, p 92E-117, 16 June 1979 & JP A 5448262
- IBM Technical Disclosure Bulletin, vol. 9, no. 10, March 1967 (New York, US), P.D. Davidse et al.: "Electro-optic switch", pp 1383-1384
- Patent Abstracts of Japan, vol. 7, no 127, p (P-201)(1272), 3 June 1983 & JP A 5844401
- Applied Optics, vol. 14, no. 11, November 1975 (New York, US), R.H. Hopkins et al.: "Moisture resistant optical films: their production and characterization", pp 2631-2638

## Description

The present invention relates to the elimination of field-induced instabilities in electrooptic modulator arrays for use in light valve arrays.

Electrooptic materials are those whose optical properties change in accordance with the strength of an electric field established within them. These materials make possible an electrically controlled electrooptic modulator array for use in a light valve array.

One example of a preferred electrooptic material frequently used as the substrate in electrooptic modulator arrays is lanthanum-doped lead zirconate titanate (PLZT). Without an electric field being established, some compositions of PLZT are optically isotropic, while others exhibit a static birefringence. In either case, when an electric field is applied through a substrate of PLZT, the PLZT crystal structure changes. This change in crystal structure causes a change in birefringence. An optic axis is thereby formed which is aligned parallel to the electric field lines.

The light valve array includes a modulator array and an analyzer. The modulator array often has a PLZT substrate with a plurality of spaced electrodes on one of its surfaces. Upon the application of a voltage across a pair of electrodes, an electric field is established in a portion of the PLZT substrate which is called a pixel portion, and the PLZT substrate becomes birefringent and changes the state of polarization of incident plane polarized light. If a phase shift of 180° is introduced between orthogonal polarizations (E vectors) of plane polarized light entering and exiting the birefringent substrate, then the voltage applied is called the half wave voltage. If the incident light is plane polarized, with the E vector being at 45° to the induced optic axis, then plane polarized light with its E vector rotated 90° with respect to the incident polarization E vector will emerge from the substrate. In this case a maximum amount of light will be transmitted by an analyzer crossed with the polarization direction of the light incident on the substrate. Unfortunately, after being operated, modulator arrays often exhibit light transmission drifts.

Davidse and Riseman article published in IBM Technical Disclosure Bulletin, Vol. 9, No 10 dated March 1967 page 1383-1384 discloses an electrooptic modulator. The electroptic substrate which is a KDP crystal is completely encapsulated with glass or quartz in order to prevent degradation of the crystal by water vapor moisture. The transparent electrodes overlie the protective layer.

JP-A-5448262, published in June 1979, describes a transducer completely surrounded by a silicone oil to prevent moisture absorption. The electrodes necessary for operation of the device do not contact the electrooptic crystalline plate.

Soltoff describes in "Television application of PLZT ceramics" published in International Broadcast Engineer Vol. 7, No 137-138 of June-July 1976 page 18-21 a PLZT wafer used as an electrooptic device. The problem of moisture is solved by encapsulating the wafer in an elastomer.

The object of this invention is to provide an electrooptic modulation array in which light transmission drifts are reduced. Reduction of degradation of electrooptic devices was already known, as already mentioned, by encapsulating the electrooptic material in an impermeable layer. The object of this invention is to provide another way of improving the stability of an electrooptic modulator.

The object of the invention is obtained by a method of finishing an electrooptic modulator, as defined in claim 1.
Fig. 1 is a schematic perspective illustrating a light valve array having an electrooptic modulator array and an analyzer; and
Fig. 2 is a partial side sectional view of the modulator array of Fig. 1.

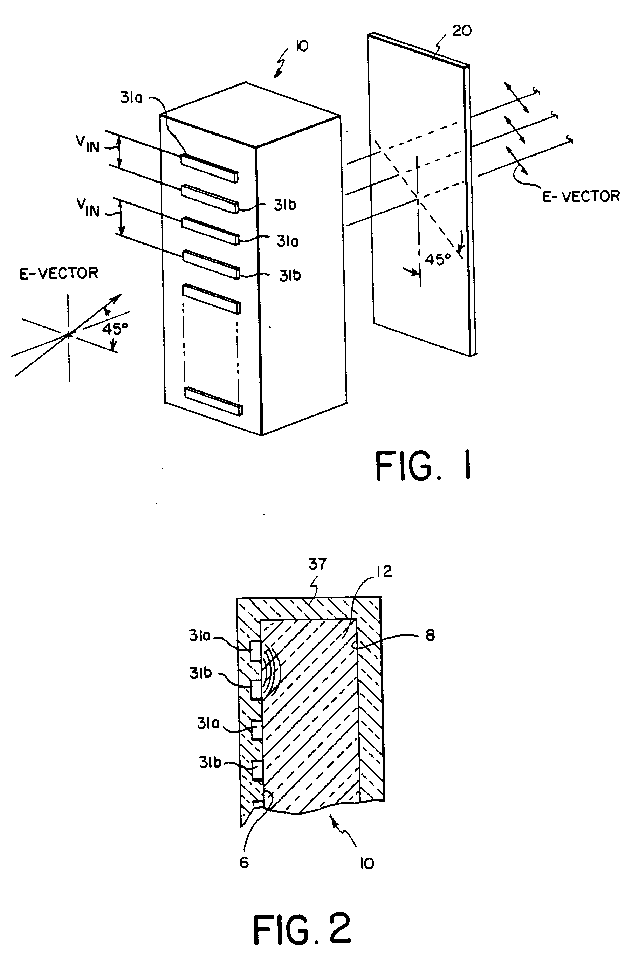

As shown in Fig. 1, there is provided a light valve array having an electrooptic modulator array 10 and an analyzer 20 in accordance with the invention. The dotted line across the analyzer 20 indicates the direction of the plane polarized light electric vector (E-vector) transmitted by the analyzer 20. As shown in Fig. 2, the modulator array 10 includes a substrate 12 formed of an electrooptic material, preferably an optically isotropic PLZT which changes its birefringence in response to the establishment of an electric field in the substrate. A single input light beam of monochromatic plane polarized light is incident normally upon the surface of the substrate 12 from the left, as shown, and exits at the right as a plurality of beams. As shown the polarization or E-vector of the input light beam is perpendicular to the direction of travel of the light beam. The input light beam may be produced by any of several means (not shown) which are well known in the art, such as a laser, or an incandescent light source with a polarizer.

The modulator array 10 includes a plurality of pixel portions. Each pixel portion is formed between adjacent electrodes 31a and 31b. Plane polarized light which passes through a particular pixel portion of the modulator array is formed into a beam. Each beam of light which is transmitted by the analyzer 20 addresses a pixel contained in a corresponding pixel region at an image zone (not shown) where the light is focused.

As shown in Fig. 2, the substrate 12 has first and second substantially parallel surfaces 6 and 8, respectively. All the electrodes are mounted on the surface 6. The lines between electrode 31a and electrode 31b represent electric field lines for a pixel portion. All the electrodes can be built into the substrate or they can be deposited as shown directly on the substrate surface by any of several means well-known in the art such as vacuum deposition of metal and photolithography. While the electrodes may be formed of any suitable material, metals such as chrome-gold, titanium-gold, and chrome-nickel-gold are particularly effective.

Referring again to Fig. 2, a single pixel portion is defined by the electric field applied between a pair of adjacent electrodes 31a and 31b on the first surface 6 of the substrate 12. A voltage is applied across an adjacent pair of electrodes 31a and 31b and establishes the electric field. Preferably, the electrodes of a pixel portion are arranged so that these electric field lines and their established optic axes are oriented at 45° angles relative to the E-vector of the received polarized light and are substantially perpendicular to the incidence direction of such received light. The voltage Vin is preferably selected to be either zero volts or the half wave voltage.

Information of a pixel portion is modulated by controlling Vin. When no voltage (Vin is zero) is applied across a pair of electrodes 31a and 31b, the plane of polarization is not changed and the analyzer 20 blocks the polarized light passing through that pixel portion. However, when the voltage Vin is the half-wave voltage, the electric field as shown in Fig. 2 is established. The plane of polarization of a plane polarized light beam in such a pixel portion is changed by 90° and light is passed by the analyzer 20.

After being operated, it has been found that light valve arrays exhibit field-induced light transmission drifts which are different from the well known photo-induced space charge drifts. Field-induced drifts occur even when a light valve is operated at very low light levels. To achieve stable light intensity output, field-induced drifts are compensated for by varying with time the amplitude of the voltage applied across each pair of electrodes. The problem is compounded by the fact that different modulator array pixel portions often have light transmission drifts which vary differently with time, thus increasing the nonuniformity of the intensities of the different light beams transmitted by the light valve array. In addition to the drift in light transmission for each pixel portion at a given applied voltage, there is also an increase in light transmission for each pixel portion when the applied voltage is brought to zero, thereby reducing light valve contrast.

In accordance with this invention, there is provided an electrooptic modulator array in which no change is needed, after repeated operation of the array, in the amplitude of the applied voltage across each pair of modulator array pixel portion electrodes to change the plane of polarization (E vector) of incident plane polarized light by 90°.

It has been discovered that the variation in the change of plane polarized light (E vector) passing through a pixel portion results from the accumulation of charge on a surface of the modulator substrate. This is the field-induced instability. It has also been discovered that the appearance of surface charge directly correlates with the presence of adsorbed water on the PLZT substrate surface.

In accordance with the present invention, a water impermeable layer 37 has been formed on the substrate 12. The term "water impermeable" means that water is prevented from reaching surface 6. It is directly coated on all the surfaces of the substrate 12 and over the electrodes 31a and 31b. Layer 37 isolates the surfaces of substrate 12 from the environment and prevents adsorbed water and the accumulation of charge on the substrate surface 6.

It has been determined that the field-induced instability results from the accumulation of charge on the PLZT substrate surface 6 between electrodes 31a and 31b. The other substrate surfaces may also collect charge that can cause the instability. Preferably, they are all overcoated.

We have confirmed that the instability of a light valve may be attributed to the field-induced instability by testing for the presence of surface charge. This was accomplished by wiping a surface of a pixel portion of the modulator 10 with a suitable material, e.g. an alcohol moistened swab which removes surface charge. Comparison of light valve behavior before and after wiping revealed whether or not charge existed on that surface.

The appearance of surface charge correlates with the presence of adsorbed water on the PLZT surface. PLZT adsorbs water from the atmosphere and this results in the buildup of charge. This can be shown by moistening that portion of surface 6 on substrate 12 which collects charge. The level of charge on the surface 6 will increase. The field induced instability is easily eliminated by removing adsorbed water from the PLZT surface 6 and then overcoating such surface 6 with a transparent, water impermeable layer. Adsorbed water can be removed by placing an electrooptic modulator array in a chamber having a dry nitrogen atmosphere which is heated to a temperature of more than 100°C. The modulator is left in the chamber until the adsorbed water is removed. The overcoating layer is then deposited in this nitrogen atmosphere. The layer 37 can be formed by many techniques including dip coating, spin coating or spraying. The layer 37 is electrically insulating, transparent, optically isotropic and water impermeable. It should have a uniform thickness to prevent the refraction of light. An example of an effective material that has been used is acrylic coating #MS-465 manufactured by Miller-Stephenson Corporation of Danbury, Connecticut, U.S.A. This material is highly insulative and prevents current from flowing through the layer 37 between adjacent electrodes.

An improved electrooptic modulator which is provided to eliminate field-induced instabilities is useful in a light valve which can be employed in a printer which converts electrical signals to visual images on prints. It can also be used in electronic copiers and duplicators. The modulator has the advantage of eliminating non-linearities in output images caused by field induced instabilities.

## Claims

1. A method of finishing an electrooptic modulator composed of an assembly presenting an electrooptic material and metal pattern electrodes on a surface of said electrooptic material, to prevent said electrooptic material from collecting charge that causes a field induced instability, wherein said method comprises the steps of :
a) heating said assembly in a controlled atmosphere to remove moisture from said electroded surface ; and
b) coating at least said electroded surface with a transparent, water impermeable and electrically insulative protective layer, said coating step being effected in the same controlled atmosphere as said heating step such that no substantial moisture is adsorbed on said surface between said heating and coating steps.

2. The method of claim 1, wherein said heating step is carried out in a dry nitrogen atmosphere and said coating step is carried out in said dry nitrogen atmosphere.

3. The method of claim 2, wherein the step of heating comprises heat treating at a temperature of greater than 100°C.

4. The method of claim 1, wherein said water impermeable layer is an acrylic composition, which is electrically insulating and transparent.

5. The method of claim 4, wherein said acrylic composition is substantially isotropic.

## Patentansprüche

1. Verfahren zur Endbehandlung eines elektrooptischen Modulators, der aus elektrooptischem Material und einer mit dessen Oberfläche verbundenen Metallelektroden-Anordnung besteht, um zu verhindern, daß das elektrooptische Material eine feldinduzierte Instabilität hervorrufende Aufladung erfährt, dadurch gekennzeichnet, daß das Verfahren folgende Schritte aufweist:
a) Erhitzen der Baugruppe in einer kontrollierten Atmosphäre, um Feuchtigkeit von der elektrodenbestückten Oberfläche abzuführen; und
b) Beschichten von mindestens der elektrodenbestückten Oberfläche mit einer transparenten, wasserundurchlässigen und elektrisch isolierenden Schutzschicht, wobei die Beschichtung in der gleichen kontrollierten Atmosphäre erfolgt wie dei Erhitzung, so daß zwischen Erhitzen und Beschichten keine nennenswerte Feuchtigkeitsmenge auf der Oberfläche adsorbiert wird.

2. Verfahren nach Anspruch 1, dadurch gekennzeichnet, daß sowohl die Erhitzung als auch die Beschichtung in trockener Stickstoffatmosphäre erfolgen.

3. Verfahren nach Anspruch 2, dadurch gekennzeichnet, daß es sich beim Erhitzen um eine Wärmebehandlung bei einer über 100°C liegenden Temperatur handelt.

4. Verfahren nach Anspruch 1, dadurch gekennzeichnet, daß die wasserundurchlässige Schicht eine elektrisch isolierende und transparente Acrylverbindung ist.

5. Verfahren nach Anspruch 4, dadurch gekennzeichnet, daß die Acrylverbindung im wesentlichen isotropisch ist.

## Revendications

1. Traitement de finition d'un modulateur électrooptique composé d'un ensemble présentant un matériau électrooptique et des électrodes métalliques présentant une configuration donnée disposées sur la surface dudit matériau électrooptique, traitement qui évite que ledit matériau électooptique ne recueille une charge qui provoque une instabilité due à un champ et qui comprend les opérations de
a) chauffer ledit ensemble dans une atmosphère contrôlée pour enlever l'humidité de la surface desdites électrodes ; et
b) déposer au moins sur ladite surface des électrodes une couche protectrice transparente, isolante électriquement et imperméable à l'eau, l'opération de dépôt étant réalisée dans la même atmosphère contrôlée que l'opération de chauffage de manière que pratiquement aucune humidité ne puisse être adsorbée sur ladite surface entre l'opération de chauffage et l'opération de dépôt.

2. Traitement selon la revendication 1, dans lequel l'opération de chauffage est réalisée dans une atmosphère sèche d'azote et l'opération de dépôt est réalisée dans la même atmosphère sèche d'azote.

3. Traitement selon la revendication 2, dans lequel l'opération de chauffage comprend le réchauffement à une température supérieure à 100 °C.

4. Traitement selon la revendication 1, dans lequel la couche imperméable à l'eau est une composition acrylique électriquement isolante et transparente.

5. Traitement selon la revendication 4, dans lequel la composition acrylique est une substance pratiquement isotrope.
